# EUROPEAN PATENT SPECIFICATION

(11) **EP 2 278 800 B1**
(45) Date of publication and mention of the grant of the patent: **19.12.2012**
(21) Application number: 08873911.5
(22) Date of filing: 15.10.2008
(51) Int. Cl.: H04N 21/4623, H04N 21/266, H04N 21/4405

(54) **A METHOD AND APPARATUS FOR TERMINAL TO OBTAIN DECRYPTION AND DESCRAMBLING INFORMATION**
VERFAHREN UND VORRICHTUNG FÜR EIN ENDGERÄT ZUM ERHALTEN VON ENTSCHLÜSSELUNGS- UND ENTWÜRFELUNGSINFORMATIONEN
PROCÉDÉ ET APPAREIL PERMETTANT À UN TERMINAL D'OBTENIR DES INFORMATIONS DE DÉCHIFFREMENT ET DE DÉBROUILLAGE

(30) Priority: 17.04.2008 CN 200810090297
(43) Date of publication of application: 26.01.2011
(73) Proprietor: ZTE Corporation, Shenzhen, Guangdong 518057 (CN)
(72) Inventor: YAN, Xiangbiao, Shenzhen Guangdong 518057 (CN); WANG, Biao, Shenzhen Guangdong 518057 (CN)
(74) Representative: Pallini, Diego
(86) International application number: PCT/CN2008/072706
(87) International publication number: WO 2009/127109

(56) References cited:
- EP-A1- 1 821 538
- WO-A1-01/33851
- WO-A1-2007/145411
- CN-A- 1 372 731
- CN-A- 1 890 976
- JP-A- 2007 060 167
- US-A1- 2004 123 330
- US-A1- 2006 143 448

## Description

### Technical Field

The present invention relates to the field of mobile multimedia broadcast, and more particularly, to a method and apparatus for a mobile multimedia broadcast terminal to obtain decryption and descrambling information.

### Technical Background

Mobile multimedia broadcast is a broadcast multimedia playing technology that is emerging in recent years. A user can view multimedia services, such as TV, in the high speed mobile environment with a handheld terminal. The terminal receives a multimedia service program list on wireless broadcast channels and selects frequency channels that the user is entitled to watch so as to receive and play multimedia data in the frequency channels such that the user can watch TV on the mobile terminal.

The CMMB technology, which is a mobile multimedia broadcast technology developed recently, sends mobile multimedia services to a receiving terminal in a downlink broadcast manner based on the orthogonal frequency division multiplexing (OFDM) modulation technology, with a broadcast channel frame duration being 1 second, every 25 milliseconds constituting one time slot, and each broadcast channel frame having 40 time slots. In order to save power consumption of the receiving terminal, the multimedia broadcast service data is sent in a time division mode.

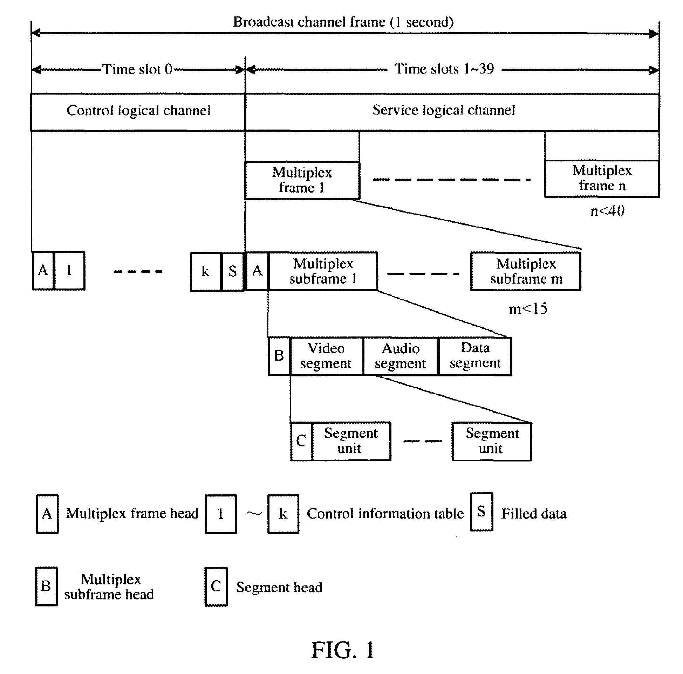

A CMMB broadcast channel frame is composed of a control logical channel (control channel for short) and a traffic logical channel (traffic channel for short). As shown in Fig.1, the first time slot (time slot 0) of the CMMB broadcast channel is the control logical channel for transmitting control information; and other time slots are the traffic logical channel for transmitting mobile multimedia service data.

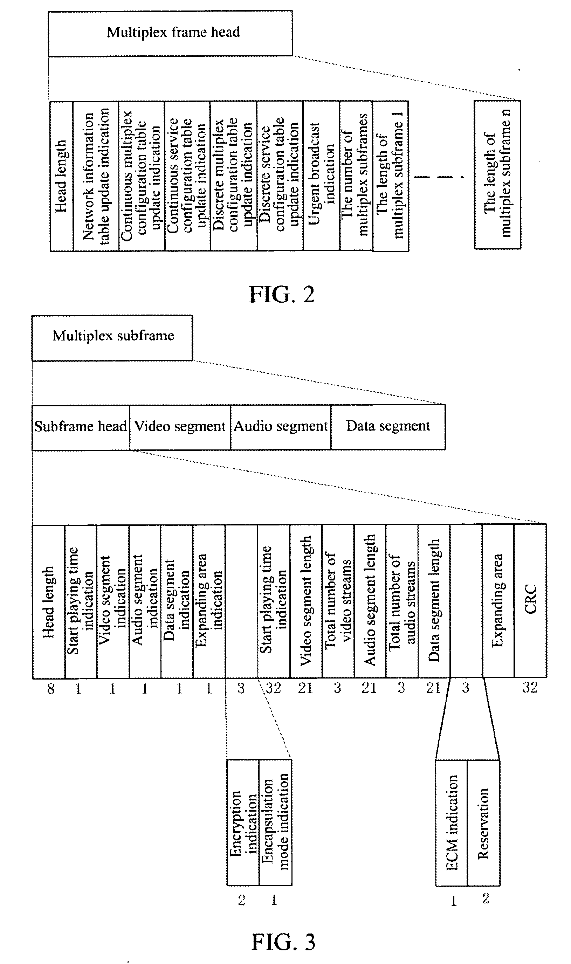

The control information and mobile multimedia service data are sent in a form of multiplex frames on the control logical channel and traffic logical channel, respectively. Each multiplex frame occupies an integral number of time slots and is composed of a multiplex frame head and a payload. The payload of the multiplex frame of the control logical channel is composed of a plurality of control information tables; the payload of the multiplex frame of the traffic logical channel is composed of a plurality of multiplex subframes, the number of which is indicated in the multiplex frame head; and each multiplex subframe is composed of a subframe head, a video segment, an audio segment and a data segment, each segment (the video segment, audio segment and data segment) being composed of a segment head and a plurality of segment units. The structure of the multiplex frame head is shown in FIG. 2

An encryption and authorization system of a mobile multimedia broadcast system encrypts multimedia data, such as video, audio, etc., so as to ensure that only legally authorized users can decrypt and descramble the multimedia data using decryption and descrambling information to play normally program contents of the received multimedia broadcast; while the unauthorized users cannot obtain and use the decryption and descrambling information to decrypt the media data, thereby ensuring normal operation of the mobile multimedia broadcast system.

The mobile multimedia broadcast system needs to transfer the decryption and descrambling information to a mobile terminal via an appropriate transmitting channel, and the mobile terminal obtains encryption control words using the decryption and descrambling information to decrypt the multimedia service data so as to use multimedia broadcast services normally. There are many methods for transmitting the decryption and descrambling information, including out-of-band transmission method and in-band transmission method.

The traditional out-of-band transmission method may transmit the decryption and descrambling information via a transmitting channel of a mobile communication network or a wideband wireless network. However, applying this method needs to add the service correlation indication in order to indicate that the transmitted decryption and descrambling information will be used for a certain or a certain type of the specified multimedia service, which will increase the bandwidth occupancy and the complexity of the system, increase operation cost and go against the development of the mobile broadcast network.

The in-band transmission method transmits the encryption and control information using the same mobile multimedia broadcast channel as the multimedia service data. For example, a digital television broadcast system encapsulates the encryption and control information into a transmission packet for transmission, which uses a transmission packet identifier different from the multimedia service data. Because the transmission packet different from the multimedia service data is used, the service correlation indication information is also needed to be added to associate the transmitted decryption and descrambling information with the corresponding multimedia service, which will increase the bandwidth occupancy and the complexity of the system as well.

To sum up, both the existing out-of-band and in-band methods for transmitting the decryption and descrambling information need to occupy certain bandwidth transmission service correlation indication information, thus the corresponding method for receiving/obtaining the decryption and descrambling information needs to receive and use also the service correlation indication information described above, thereby increasing the complexity of the mobile multimedia broadcast terminal. The following documents disclose the related information as discussed above:

US 2006/143448 A1 discloses a method and apparatus for distributing a plurality of program from a content provider device to subscriber. Each of programs is assigned to one of N service tiers, N being an integer greater than 1. The method begins by assigning a unique packet identifier to each packet type associated with a given program. Each of the plurality of programs is encrypted using one of N different encryption schemes each associated with one of the N service tiers.

WO 2007/145411A1 discloses a new digital broadcasting system and a method of processing data that is suitable for transmitting supplemental data. Fig. 2 show a structure of transport stream (TS) packet including an adaptation field, which consists of a 2-byte AF header and an N-byte stuff byte. The AF header indicates the length of the adaptation field. The length of the payload within the TS packet is equal to 182-N.

WO 01/33851 A1 discloses a method for adding a conditional access system comprises providing at the broadcast source a data stream having portion thereof reserved for insertion of security data associated with the additional conditional access system. The additional CA system is declared during the original transport stream creation at the broadcast source by adding an entry in the PMT. This entry defines a unique PID for the ECMs. The PID reserved for the extra CA system ECMs are not used in any other way.

US 2004/0123330 A1 disclose a restricted reception device enabling a subscriber receiver to selectively receive broadcasting data transferred via a digital cable broadcasting network, includes: a demultiplexer for receiving broadcasting data and ECM including a CW from the subscriber receiver, and emultiplexing them, the broadcasting data and the ECM being transferred through an in-band channel; an out-band channel signal processor for receiving an EMM from the subscriber receiver, and processing the EMM, the EMM being transferred through an out-of-band channel; a restricted reception processor for descrambling the scrambled broadcasting data ysing the ECM and the EMM received from the out-of-band channel signal processor, and remultiplexer for multiplexing the descrambled broadcasting data received from the restricted reception processor, and sending the multiplexed broadcasting data to the subscriber receiver.

EP 1821 538 A1 discloses a method of providing scrambled data including providing a stream of data units based on a sequence of clear data units by at least subjecting at least part of at least some of the clear data units to a cryptographic operation employing a first encryption key which forms a key pair with a corresponding first decryption key, and by associating data units with scrambling state identifying data for indicating a sate of scrambling applicable to the associated data unit.

### Summary of the Invention

A technical problem to be solved by the present invention is to provide a method and apparatus for obtaining decryption and descrambling information which may decrease bandwidth occupancy and complexity of a mobile multimedia broadcast terminal, so as to overcome the shortcomings of the prior art.

In order to solve the technical problem described above, the present invention provides a method for a terminal to obtain decryption and descrambling information, comprising a mobile multimedia broadcast terminal identifying and obtaining ECM data in the decryption and descrambling information from a multiplex subframe data segment, in which data of a program resides, based on an ECM data unit type value, and identifying and obtaining EEM EMM data from a multiplex subframe data segment corresponding to a service identifier used for transmitting EMM data based on an the EMM data unit type value.

In addition, the terminal receives an encryption and authorization description table from a mobile multimedia broadcast control channel and obtains the ECM data unit type value and EMM data unit type value of a conditional access system, to which the terminal belongs, from the table based on a conditional access system identifier of the terminal.

In addition, the terminal receives an encryption and authorization description table from a mobile multimedia broadcast control channel and obtains the service identifier used for transmitting the EMM data from the table based on a conditional access system identifier of the terminal.

In addition, the terminal receives an encryption and authorization description table from a mobile multimedia broadcast control channel and obtains a corresponding ECM transfer type identifier from the table based on a conditional access system identifier of the terminal, and determines that the ECM data is required to be received in the multiplex subframe data segment, in which data of the program resides, based on the ECM transfer type identifier.

In addition, the terminal determines whether the program is a scrambled program based on an encryption indication field value of a multiplex subframe head, in which data of the program resides.

In addition, the terminal determines whether the ECM data is transmitted in the multiplex subframe data segment based on an ECM indication field value of a multiplex subframe head, in which data of the program resides.

The present invention further provides an apparatus for a mobile multimedia broadcast terminal to obtain decryption and descrambling information comprising a decryption and descrambling information reading unit and, and the apparatus further comprising an identifier reading unit, wherein,
the identifier reading unit is configured to read and output an ECM data unit type value, an EMM data unit type value and a service identifier used for transmitting EMM data.

The decryption and descrambling information reading unit is configured to identify and obtain ECM data from a multiplex subframe data segment, in which data of a program resides, based on the ECM data unit type value output by the identifier reading unit, and identify and obtain the EMM data from the multiplex subframe data segment corresponding to the service identifier used for transmitting the EMM data based on the EMM data unit type value output by the identifier reading unit.

In addition, the identifier reading unit is further configured to obtain and output the corresponding ECM data unit type value and EMM data unit type value from an encryption and authorization description table based on a conditional access system identifier of the terminal.

In addition, the identifier reading unit is further configured to read a conditional access system identifier of the terminal and obtain and output a corresponding ECM transfer type identifier from an encryption and authorization description table based on a conditional access system identifier of the terminal.

The decryption and descrambling information unit determines that the ECM data is required to be received in the multiplex subframe data segment, in which data of the program resides, based on the ECM transfer type identifier.

In addition, the identifier reading unit is further configured to read and output an encryption indication field value and an ECM indication filed value of a multiplex subframe head, in which data of the program resides.

The decryption and descrambling information reading unit determines whether the program is a scrambled and transmitted program based on the encryption indication field value and determines whether the ECM data is transmitted in the multiplex subframe data segment based on the ECM indication field value.

Using the above technique scheme in accordance with the present invention, by obtaining the ECM data in the decryption and descrambling information from the multiplex subframe corresponding to the program to be received, the analysis of correlation information and correlation protocols between the transmitted program service data and ECM data and the operation of obtaining the corresponding ECM data by using this correlative relationship are omitted, thereby saving bandwidth resources of the mobile multimedia broadcast network, simplifying the operation for the mobile multimedia broadcast terminal to obtain the ECM data and decreasing the terminal's conditional access system's requirements for terminal resources.

### Brief Description of the Drawings

FIG. 1 is a schematic diagram of a structure of a CMMB broadcast channel frame;
FIG. 2 is a schematic diagram of a structure of a CMMB multiplex frame head;
FIG. 3 is a schematic diagram of a structure of a CMMB multiplex subframe head;
FIG. 4 is a flowchart of a method for a mobile multimedia broadcast terminal to obtain decryption and descrambling information in accordance with an embodiment of the present invention; and
FIG. 5 is a block diagram of an apparatus for a mobile multimedia broadcast terminal to obtain decryption and descrambling information in accordance with an embodiment of the present invention.

### Preferred Embodiments of the Invention

Because data of one program of mobile multimedia broadcast is encapsulated into one multiplex subframe for transmission and data of only one program is encapsulated into each multiplex subframe, i.e., there exists an one-to-one correspondence between the program and the multiplex subframe, a front end (i.e., transmitting end) of a mobile multimedia broadcast system may put the scrambled multimedia data of the program and the corresponding entitlement control message (ECM) into the same multiplex subframe for transmission based on the above-described correspondence between the program and the multiplex subframe. Accordingly, a mobile multimedia broadcast terminal receives the scrambled multimedia data and the corresponding ECM in the same multiplex subframe and descrambles the multimedia data in conjunction with other decryption and descrambling information.

The present invention will be described in detail in conjunction with the accompanying figures and embodiments.

FIG. 3 is a schematic diagram of a structure of a multiplex subframe. As shown in FIG. 3, the multiplex subframe is composed of a multiplex subframe head, a video segment, an audio segment and a data segment. The multiplex subframe head comprises fields, such as a head length of the multiplex subframe, encryption indication, ECM indication. The multiplex frame composed of a plurality of complete multiplex subframe is sent to the mobile multimedia broadcast terminal by a mobile multimedia broadcast channel.

The encryption indication in the multiplex subframe head shown in FIG. 3 is used to identify whether the program corresponding to the multiplex subframe is encrypted (scrambled), while the ECM indication is used to identify whether the data segment of the multiplex subframe contains ECM data for decryption and descrambling.

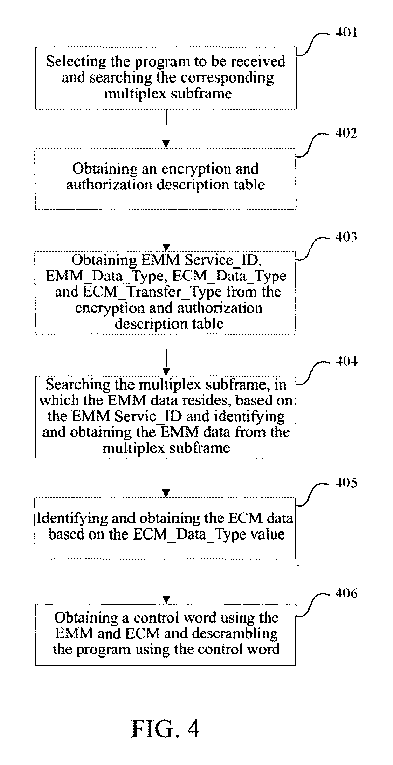

FIG. 4 is a flowchart of a method for a mobile multimedia broadcast terminal to obtain decryption and descrambling information in accordance with an embodiment of the present invention. As shown in FIG. 4, the method comprises the following steps.

401: The mobile multimedia broadcast terminal selects a program to be watched (received) based on a program list or electronic service guide (ESG) of the mobile multimedia broadcast and searches a service configuration table and a multiplex configuration table for a multiplex subframe used by the program based on a service identifier of the program.

402: The mobile multimedia broadcast terminal obtains an encryption and authorization description table on a control channel.

In order to receive correctly multimedia service data transmitted on a broadcast channel of the front end of the mobile multimedia broadcast system, the multimedia broadcast terminal, as a core component of the mobile multimedia broadcast system, generally needs to obtain correctly the decryption and descrambling information of mobile multimedia services. The decryption and descrambling information mainly contains entitlement management message (EMM) and ECM.

In order to obtain the EMM and ECM, the encryption and authorization description table is required to be obtained firstly. The encryption and authorization description table is one of mobile multimedia broadcast control information tables and is identified and obtained from the control channel based on a table identifier. The encryption and authorization description table may establish a correlation with the EMM and ECM in transport stream for one or more encryption and authorization system. The encryption and authorization description table contains mainly the following items:
Table_ID (the identification number of the table), which is an 8-bit field and is used for identifying the control information table as an encryption and authorization description table;
Section_Length, which is a 16-bit field and includes a table identification number and not a CRC_32 field, its unit being a type;
Update_Number, which is a 4-bit field and represents a update number of the encryption and authorization description table, wherein when contents of the encryption and authorization description table change, the update number of the encryption and authorization table is required to be changed to identify this change, and the update number takes a value ranging from 0 to 15 cyclically and is increased by 1 in each update;
Section_Number, which is an 8-bit field and represents a section number of the encryption and authorization description table that is counted from 0;
Section_Quantity, which is an 8-bit field and represents the quantity of the segmented section of the encryption and authorization description table;
CA_System_ID (conditional access system identifier), which is a 16-bit field and represents an identification number of a conditional access system, different terminals of the conditional access system having different CA system identification numbers;
Service_ID (the service identification number), which is a 16-bit field and represents a service identification number corresponding to the EMM data, wherein the EMM data of the CA system will be transmitted in a multiplex subframe corresponding to the service identification number;
EMM_Data_Type, which is an 8-bit field and represents a data unit type of the EMM data in the multiplex subframe;
ECM_Data_Type, which is an 8-bit field and represents a data unit type of the ECM data in the multiplex subframe;
ECM_Transfer_Type, which is used for identifying a transfer type of the ECM data; wherein
00 indicates that the ECM data is transmitted in a multiplex subframe data segment of the scrambled data of the corresponding program;
01-11 represents reservation; and
CRC_32 which is a 32-bit field and contains a cyclic redundancy check value.

403: After obtaining the encryption and authorization description table, the mobile multimedia broadcast terminal obtains the corresponding fields, such as the EMM Service_ID, EMM_Data_Type, ECM_Data_Type and ECM_Transfer_Type, from this table based on the CA_System_ID (which is generally stored in a conditional access card or is a default CA_System_ID) of the CA system, to which the terminal belongs.

The EMM_Data_Type field is used to identify the EMM data and The ECM_Data_Type field is used to identify the ECM data. For example, the EMM_Data_Type and ECM_Data_Type may take values of 128 and 129, respectively.

404: The mobile multimedia broadcast terminal searches a service configuration and a multiplex configuration table for a multiplex subframe, in which the EMM data resides, based on the EMM Service_ID and identifies and obtains the EMM data from the multiplex subframe based on the EMM_Data_Type value.

The EMM data is sent repeatedly and cyclically in a data segment in the corresponding multiplex subframe.

405: The mobile multimedia broadcast terminal determines whether the program is encrypted based on an encryption indication in a subframe head in the multiplex subframe corresponding to the program to be received, if it is encrypted, the decryption and descrambling information is required to be obtained to complete the authorization on the user; and a determination is made whether there is the ECM data in the data segment of the multiplex subframe based on the ECM indication field of the multiplex subframe head, and if there is the ECM data, the ECM data in the multiplex subframe is identified and obtained based on the ECM_Data_Type value.

Of course, the mobile multimedia broadcast terminal may also determine whether there is the ECM data in the data segment of the multiplex subframe based on the ECM_Transfer_Type field in the encryption and authorization description table.

406: If the mobile multimedia broadcast terminal is an authorized user terminal of its CA system, then the decryption and descrambling information, such as the EMM and ECM, may be used to obtain a control word, which may be used to descramble the multimedia data of the program such that the program of the mobile multimedia broadcast may be watched. Although the unauthorized mobile multimedia broadcast terminal users may obtain the EMM and ECM, however, they cannot utilize the decryption and descrambling information, such as the EMM and ECM, to obtain the control word, so they cannot descramble the multimedia data of the program and watch the program.

The process of utilizing the EMM and ECM to obtain the control word comprises mainly the follow steps (the specific details involved in the following steps are not within the discussed scope of the present invention):
406a: after receiving the EMM, the mobile multimedia broadcast terminal decodes a personal identification code (which is generally stored in the conditional access card) and the EMM data to obtain an intermediate key;
406b: the intermediate key and the ECM are decoded to obtain the control word; and
406c: the control word is sent to a decryption and descrambling unit to perform descrambling operation.

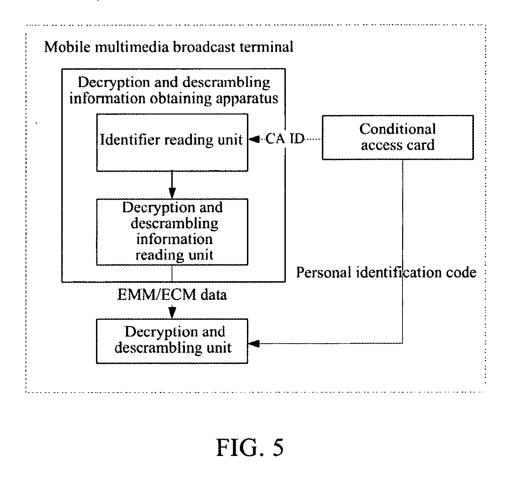

FIG. 5 is a block diagram of an apparatus for a mobile multimedia broadcast terminal to obtain decryption and descrambling information in accordance with an embodiment of the present invention. As shown in FIG. 5, the apparatus comprises an identifier reading unit and a decryption and descrambling information reading unit.

The identifier reading unit is configured to read an identifier of a conditional access system, to which the terminal belongs, from a conditional access card or use an identifier of a conditional access system which is defaulted by the terminal; read and output the corresponding EMM_Data_Type value, ECM_Data_Type value, Service_ID of the EMM data and ECM_Transfer_Type identifier from the encryption and authorization description table based on the identifier of the conditional access system; and read and output an encryption indication field and ECM indication field from a multiplex subframe head corresponding to the program to be received.

The decryption and descrambling information reading unit is configured to determine the program to be received is the scrambled and transmitted program based on the encryption indication field output by the identifier reading unit; determine that the ECM data in the decryption and descrambling information is transmitted in a data segment of the multiplex subframe corresponding to the program to be received based on the ECM indication field or ECM_Transfer_Type identifier output by identifier reading unit; determine the multiplex subframe transmitting the EMM data in the decryption and descrambling information based on the Service_ID of the EMM data output by the identifier reading unit; and identify and obtain the EMM data from the corresponding multiplex subframe based on the EMM_Data_Type value output by the identifier reading unit and output it to a decryption and descrambling unit of the mobile multimedia broadcast terminal, which decodes the EMM data and personal identification code to obtain an intermediate key.

The ECM data is identified and obtained from the data segment of the multiplex subframe corresponding to the program to be received based on the ECM_Data_Type value output by the identifier reading unit and is output to the decryption and descrambling unit of the mobile multiplex broadcast terminal, which decodes the ECM data and the above intermediate key to obtain the control word for descrambling to complete the decryption and descrambling of the program.

### Industrial Applicability

According to the present invention, by obtaining the ECM data in the decryption and descrambling information from the multiplex subframe corresponding to the program to be received, the analysis of correlation information and correlation protocols between the transmitted program service data and ECM data and the operation of obtaining the corresponding ECM data using this correlative relationship are omitted, thereby saving bandwidth resources of the mobile multimedia broadcast network, simplifying the operation for the mobile multimedia broadcast terminal to obtain the ECM data and decreasing the requirement for terminal resources of the terminal's conditional access system.

## Claims

1. A method for a terminal to obtain decryption and descrambling information, **characterized in that** the method comprises:
a mobile multimedia broadcast terminal identifying and obtaining Entitlement Control Message (ECM) data in decryption and descrambling information from a multiplex subframe data segment, in which data of a program resides, based on an ECM data unit type value, and identifying and obtaining Entitlement Management Message ( EMM) data from a multiplex subframe data segment corresponding to a service identifier used for transmitting the EMM data based on an EMM data unit type value.

2. The method according to claim 1, further comprising:
the terminal receiving an encryption and authorization description table from a mobile multimedia broadcast control channel and obtains the ECM data unit type value and EMM data unit type value of a conditional access system, to which the terminal belongs, from the table based on a conditional access system identifier of the terminal.

3. The method according to claim 1, further comprising:
the terminal receiving an encryption and authorization description table from a mobile multimedia broadcast control channel and obtaining the service identifier used for transmitting the EMM data from the table based on a conditional access system identifier of the terminal.

4. The method according to claim 1, further comprising:
the terminal receiving an encryption and authorization description table from a mobile multimedia broadcast control channel and obtaining a corresponding ECM transfer type identifier from the table based on a conditional access system identifier of the terminal, and determining that the ECM data is required to be received in the multiplex subframe data segment, in which data of the program resides, based on the ECM transfer type identifier.

5. The method according to claim 1, further comprising:
the terminal determining whether the program is a scrambled program based on an encryption indication field value of a multiplex subframe head, in which data of the program resides.

6. The method according to claim 1, further comprising:
the terminal determining whether the ECM data is transmitted in the multiplex subframe data segment based on an ECM indication field value of a multiplex subframe head, in which data of the program resides.

7. An apparatus for a mobile multimedia broadcast terminal to obtain decryption and descrambling information comprising a decryption and descrambling information reading unit, the apparatus further comprising an identifier reading unit, wherein:
the identifier reading unit is configured to read and output an Entitlement Control Message (ECM) data unit type value, an Entitlement Management Message (EMM) data unit type value and a service identifier used for transmitting EMM data; **characterized in that**
the decryption and descrambling information reading unit is configured to identify and obtain ECM data from a multiplex subframe data segment, in which data of a program resides, based on the ECM data unit type value output by the identifier reading unit, and identify and obtain the EMM data from the multiplex subframe data segment corresponding to the service identifier used for transmitting the EMM data based on the EMM data unit type value output by the identifier reading unit.

8. The apparatus according to claim 7, wherein the identifier reading unit is further configured to obtain and output the corresponding ECM data unit type value and EMM data unit type value from an encryption and authorization description table based on a conditional access system identifier of the terminal.

9. The apparatus according to claim 7, wherein the identifier reading unit is further configured to read a conditional access system identifier of the terminal and obtain and output a corresponding ECM transfer type identifier from an encryption and authorization description table based on a conditional access system identifier of the terminal;
the decryption and descrambling information unit determines that the ECM data is required to be received in the multiplex subframe data segment, in which data of the program resides, based on the ECM transfer type identifier.

10. The apparatus according to claim 7, wherein the identifier reading unit is further configured to read and output an encryption indication field value and an ECM indication filed value of a multiplex subframe head, in which data of the program resides;
the decryption and descrambling information reading unit determines whether the program is a scrambled and transmitted program based on the encryption indication field value and determines whether the ECM data is transmitted in the multiplex subframe data segment based on the ECM indication field value.

## Patentansprüche

1. Verfahren für ein Endgerät zum Beschaffen von Entschlüsselungs - und Entwürfelungsinformationen,
**dadurch gekennzeichnet, dass** das Verfahren umfasst, dass:
ein mobiles Multimedia-Rundfunkendgerät Daten einer Berechtigungssteuerungsmeldung (ECM) in Entschlüsselungs- und Entwürfelungsinformationen aus einem Datensegment eines Multiplexteildatenblocks, in welchem sich Daten eines Programms befinden, auf der Grundlage eines Werts vom Typ einer ECM-Dateneinheit identifiziert und beschafft, und Daten einer Berechtigungsmanagementmeldung (EMM) aus einem Datensegment eines Multiplexteildatenblocks, der einer Dienstkennung entspricht, die zum Übertragen der EMM-Daten verwendet wird, auf der Grundlage eines Werts vom Typ einer EMM-Dateneinheit identifiziert und beschafft.

2. Verfahren nach Anspruch 1, das ferner umfasst, dass:
das Endgerät eine Verschlüsselungs- und Autorisierungsbeschreibungstabelle von einem Steuerkanal für mobilen Multimedia-Rundfunk empfängt und den Wert vom Typ der ECM-Dateneinheit und den Wert vom Typ der EMM-Dateneinheit eines Zugriffskontrollsystems, zu welchem das Endgerät gehört, aus der Tabelle auf der Grundlage einer Kennung des Endgeräts für das Zugriffskontrollsystem beschafft.

3. Verfahren nach Anspruch 1, das ferner umfasst, dass:
das Endgerät eine Verschlüsselungs- und Autorisierungsbeschreibungstabelle von einem Steuerkanal für mobilen Multimedia-Rundfunk empfängt und die Dienstkennung, die zum Übertragen der EMM-Daten verwendet wird, aus der Tabelle auf der Grundlage einer Kennung des Endgeräts für das Zugriffskontrollsystem beschafft.

4. Verfahren nach Anspruch 1, das ferner umfasst, dass:
das Endgerät eine Verschlüsselungs- und Autorisierungsbeschreibungstabelle von einem Steuerkanal für mobilen Multimedia-Rundfunk empfängt und eine entsprechende Kennung eines ECM-Übertragungstyps aus der Tabelle auf der Grundlage einer Kennung des Endgeräts für das Zugriffskontrollsystem beschafft, und auf der Grundlage der Kennung vom ECM-Übertragungstyp feststellt, dass die ECM-Daten im Datensegment des Multiplexteildatenblocks, in welchem sich Daten des Programms befinden, empfangen werden müssen.

5. Verfahren nach Anspruch 1, das ferner umfasst, dass:
das Endgerät auf der Grundlage eines Werts eines Verschlüsselungsanzeigefelds eines Kopfs eines Multiplexteildatenblocks, in dem sich Daten des Programms befinden, feststellt, ob das Programm ein verschlüsseltes Programm ist.

6. Verfahren nach Anspruch 1, das ferner umfasst, dass:
das Endgerät auf der Grundlage eines Werts eines ECM-Anzeigefeldes eines Kopfs eines Multiplexteildatenblocks, in dem sich Daten des Programms befinden, feststellt, ob die ECM-Daten in dem Datensegment des Multiplexteildatenblocks übertragen werden.

7. Vorrichtung für ein mobiles Multimedia-Rundfunkendgerät zum Beschaffen von Entschlüsselungs- und Entwürfelungsinformationen, die eine Leseeinheit für Entschlüsselungs- und Entwürfelungsinformationen umfasst, wobei die Vorrichtung ferner eine Kennungsleseeinheit umfasst, wobei:
die Kennungsleseeinheit ausgestaltet ist, um einen Wert vom Typ einer Berechtigungssteuerungsmeldungs-Dateneinheit (ECM-Dateneinheit), einen Wert vom Typ einer Berechtigungsmanagementmeldungs-Dateneinheit (EMM-Dateneinheit) und eine Dienstkennung, die zum Übertragen von EMM-Daten verwendet wird, zu lesen und auszugeben;
**dadurch gekennzeichnet, dass**
die Leseeinheit für Entschlüsselungs- und Entwürfelungsinformationen ausgestaltet ist, um ECM-Daten von einem Datensegment eines Multiplexteildatenblocks, in dem sich Daten eines Programms befinden, auf der Grundlage des Werts vom Typ der ECM-Dateneinheit, der von der Kennungsleseeinheit ausgegeben wird, zu identifizieren und zu beschaffen, und um die EMM-Daten von dem Datensegment des Multiplexteildatenblocks, der der Dienstkennung entspricht, die zum Übertragen der EMM-Daten verwendet wird, auf der Grundlage des Werts vom Typ der EMM-Dateneinheit, der von der Kennungsleseeinheit ausgegeben wird, zu identifizieren und zu beschaffen.

8. Vorrichtung nach Anspruch 7,
wobei die Kennungsleseeinheit ferner ausgestaltet ist, um auf der Grundlage einer Kennung des Endgeräts für ein Zugriffskontrollsystem den entsprechenden Wert vom Typ der ECM-Dateneinheit und den entsprechenden Wert vom Typ der EMM-Dateneinheit aus einer Verschlüsselungs- und Autorisierungsbeschreibungstabelle zu beschaffen und auszugeben.

9. Vorrichtung nach Anspruch 7,
wobei die Kennungsleseeinheit ferner ausgestaltet ist, um eine Kennung des Endgeräts für ein Zugriffskontrollsystem zu lesen und um eine entsprechende Kennung vom ECM-Übertragungstyp aus einer Verschlüsselungs- und Autorisierungsbeschreibungstabelle auf der Grundlage einer Kennung des Endgeräts für ein Zugriffskontrollsystem zu beschaffen und auszugeben;
wobei die Einheit für Entschlüsselungs- und Entwürfelungsinformationen auf der Grundlage der Kennung vom ECM-Übertragungstyp feststellt, dass die ECM-Daten im Datensegment des Multiplexteildatenblocks empfangen werden müssen, in welchem sich Daten des Programms befinden.

10. Vorrichtung nach Anspruch 7,
wobei die Kennungsleseeinheit ferner ausgestaltet ist, um den Wert eines Verschlüsselungsanzeigefelds und den Wert eines ECM-Anzeigefelds des Kopfs eines Multiplexteildatenblocks, in welchem sich Daten des Programms befinden, zu lesen und auszugeben;
wobei die Leseeinheit für Entschlüsselungs- und Entwürfelungsinformationen auf der Grundlage des Werts des Verschlüsselungsanzeigefelds feststellt, ob das Programm ein verschlüsseltes und übertragenes Programm ist, und auf der Grundlage des Werts des ECM-Anzeigefelds feststellt, ob die ECM-Daten in dem Datensegment des Multiplexteildatenblocks übertragen werden.

## Revendications

1. Procédé pour permettre à un terminal d'obtenir des informations de déchiffrement et de désembrouillage, **caractérisé en ce que** le procédé comprend :
l'identification et l'obtention par un terminal de diffusion multimédia mobile de données de message de contrôle des titres d'accès (ECM) dans des informations de déchiffrement et de désembrouillage à partir d'un segment de données de sous-trame multiplex, dans lesquelles des données d'un programme se trouvent, en se basant sur une valeur de type unité de données ECM, et l'identification et l'obtention de données de message de gestion de titre d'accès (EMM) en provenance d'un segment de données de sous-trame multiplex correspondant à un identifiant de service utilisé pour transmettre les données d'EMM en se basant sur une valeur de type unité de données d'EMM.

2. Procédé selon la revendication 1, comprenant en outre :
la réception par le terminal d'une table de description de chiffrement et d'autorisation en provenance d'un canal de commande de diffusion multimédia mobile et l'obtention de la valeur de type unité de données ECM et la valeur de type unité de données d'EMM d'un système d'accès conditionnel, auquel le terminal appartient, à partir de la table basée sur un identifiant de système d'accès conditionnel du terminal.

3. Procédé selon la revendication 1, comprenant en outre :
la réception par le terminal d'une table de description de chiffrement et d'autorisation à partir d'un canal de commande de diffusion multimédia mobile et l'obtention de l'identifiant de service utilisé pour transmettre les données d'EMM à partir de la table en se basant sur un identifiant de système d'accès conditionnel du terminal.

4. Procédé selon la revendication 1, comprenant en outre :
la réception par le terminal d'une table de description de chiffrement et d'autorisation en provenance d'un canal de commande de diffusion multimédia mobile et l'obtention d'un identifiant de type de transfert d'ECM correspondant en provenance de la table basé sur un identifiant de système d'accès conditionnel du terminal, et la détermination que les données d'ECM doivent être reçues dans le segment de données de sous-trame multiplex, où des données du programme résident, en se basant sur l'identifiant de type transfert d'ECM.

5. Procédé selon la revendication 1, comprenant en outre :
la détermination par le terminal si le programme est ou n'est pas un programme brouillé basé sur une valeur de champ d'indication de chiffrement d'une tête de sous-trame multiplex, dans laquelle des données du programme résident.

6. Procédé selon la revendication 1, comprenant en outre :
la détermination par le terminal si les données d'ECM sont ou ne sont pas transmises dans le segment de données de sous-trame multiplex basé sur une valeur de champ d'indication d'ECM d'une tête de sous-trame multiplex, dans laquelle des données du programme résident.

7. Appareil pour l'obtention par un terminal de diffusion multimédia mobile d'informations de déchiffrement et de désembrouillage comprenant une unité de lecture d'informations de déchiffrement et de désembrouillage, l'appareil comprenant en outre une unité de lecture d'identifiant, dans laquelle :
l'unité de lecture d'identifiant est configurée pour lire et émettre en sortie une valeur de type unité de données de message de contrôle de titre d'accès (ECM), une valeur de type unité de données de message de gestion de titre d'accès (EMM) et un identifiant de service utilisé pour transmettre des données d'EMM ;
**caractérisé en ce que**
l'unité de lecture d'informations de déchiffrement et de désembrouillage est configurée pour identifier et obtenir des données d'ECM en provenance d'un segment de données de sous-trame multiplex, où des données du programme résident, en se basant sur la valeur de type unité de données d'ECM émise en sortie par l'unité de lecture d'identifiant, et identifier et obtenir les données d'EMM en provenance du segment de données de sous-trame multiplex correspondant à l'identifiant de service utilisé pour transmettre les données d'EMM en se basant sur la valeur de type unité de données d'EMM émise en sortie par l'unité de lecture d'identifiant.

8. Appareil selon la revendication 7, dans lequel l'unité de lecture d'identifiant est en outre configurée pour obtenir et émettre en sortie la valeur de type unité de données d'ECM et la valeur de type unité de données d'EMM correspondantes à partir d'une table de description de chiffrement et d'autorisation en se basant sur un identifiant de système d'accès conditionnel du terminal.

9. Appareil selon la revendication 7, dans lequel l'unité de lecture d'identifiant est en outre configurée pour lire un identifiant de système d'accès conditionnel du terminal et obtenir et émettre en sortie un identifiant de type transfert d'ECM correspondant à partir d'une table en se basant sur un identifiant de système d'accès conditionnel du terminal ;
l'unité d'informations de déchiffrement et de désembrouillage détermine que les données d'ECM doivent être reçues dans le segment de données de sous-trame multiplex, où des données du programme résident, en se basant sur l'identifiant de type transfert d'ECM.

10. Appareil selon la revendication 7, dans lequel l'unité de lecture d'identifiant est en outre configurée pour lire et émettre en sortie une valeur de champ d'indication de chiffrement et une valeur de champ d'indication d'ECM d'une tête de sous-trame multiplex, où des données du programme résident ;
l'unité de lecture d'informations de déchiffrement et de désembrouillage détermine si le programme est un programme embrouillé et transmis en se basant sur la valeur de champ d'indication de chiffrement et détermine si les données d'ECM sont transmises dans le segment de données de sous-trame multiplex en se basant sur la valeur de champ d'indication d'ECM.
